# EUROPEAN PATENT SPECIFICATION

(11) **EP 2 900 348 B1**
(45) Date of publication and mention of the grant of the patent: **12.12.2018**
(21) Application number: 13783132.7
(22) Date of filing: 26.09.2013
(51) Int. Cl.: B01D 19/00

(54) **METHOD FOR DEGASSING LIQUIDS**
VERFAHREN ZUR ENTGASUNG VON FLÜSSIGKEITEN
PROCÉDÉ PERMETTANT DE DÉGAZER DES LIQUIDES

(30) Priority: 28.09.2012 US 201261707545 P; 28.02.2013 US 201313781603
(43) Date of publication of application: 05.08.2015
(73) Proprietor: Random Technologies LLC, San Francisco, CA 94107 (US)
(72) Inventor: GOTTLIEB, Amos, San Francisco, CA 94104 (US); CRAIN, David, L., Tiburon, CA 94920 (US)
(74) Representative: Miller, James Lionel Woolverton
(86) International application number: PCT/US2013/061780
(87) International publication number: WO 2014/052511

(56) References cited:
- EP-A1- 1 579 901
- DE-A1- 3 708 950
- DE-A1- 3 923 530
- DE-A1- 19 941 271
- US-A- 3 751 879
- US-A- 5 888 275
- US-A1- 2012 160 096

## Description

### FIELD OF THE INVENTION

This invention relates to methods for changing the concentration of one or more gases in a liquid.

In some applications, a liquid is "degassed" in order to reduce the concentration of dissolved gases and/or gas bubbles in the liquid. In this specification, the term "degassing" is used to include both the removal of dissolved gases and the removal of gas bubbles (which is sometimes referred to in the art as "debubbling"). The liquid can for example be an HPLC eluent, an analytical sample or aircraft fuel. These applications make use of a "separation membrane", this term being used in this specification, to denote a membrane which is substantially impermeable to at least one liquid and through which
(1) a gas which is dissolved in the liquid and is to be removed from the liquid, and/or
(2) a gas which is to be added to the liquid,
can pass when the partial pressure of the gas on one side of the membrane is greater than the partial pressure of the gas on the other side of the membrane. For example, the membrane may be substantially impermeable to one or more of water, methyl alcohol, acetonitrile, n-hexane, ink jet fluid, jet fuel or other liquid fuel, but permeable to one or both of oxygen and nitrogen.

There are tubular degassers and planar degassers. Reference may be made, for example, to US 3,735,562, US 3,591,493, US 3,751,879, US 4,325,750 US 4,469,496, US 5,183,486, US 5,340,384, US 5,693,122, US 5,749,942, US 5,980,742, US 5,876,604, US 5,980,742, US 6,248,157, US 6,258,154, US 6,309,444, US 6,315,815, US 6,494,938, US 6,596,058, US 6,709,492, US 6,949,132, US 7,022,157, US 7,399,345, US 7,427,312, US 7,686,590, EP 0973031 and International Publication WO 2011/031333.

In many planar degassers, a planar separation membrane has a first major surface which provides at least part of one wall of a planar flow channel, and the liquid to be degassed passes through the flow channel. The pressure on the opposite major surface of the membrane (often referred to simply as a vacuum) is less than the pressure in the flow channel. There is a supporting member which supports the opposite major surface of membrane. The function of the supporting member is to support the membrane while permitting gas which passes through the separation member to go to an outlet. The vacuum maintains or helps to maintain the separation membrane in contact with the supporting member. The supporting member can for example be a porous member or a plate having multiple protrusions which contact the separation membrane but which are separated from each other so that gas can pass between the protrusions to the outlet.

In other uses of planar degassers (which might perhaps more accurately be described as devices for adding gas to liquids) a gas is adding to a liquid by passing a gas through the supporting member and the separation membrane, and into a liquid which is passing through the flow channel.

### SUMMARY OF THE INVENTION

In some uses of planar degassers making use of a vacuum above the separation member, it is desirable for a liquid to continue to flow through the flow channel when the vacuum is turned off and degassing is not taking place. This can occur, for example, when changing from one solvent to another in an HPLC system. It has been discovered, however, that when the vacuum is turned off, the membrane can separate from the supporting member and contact the bottom of the flow channel, thus preventing liquid from flowing through the flow channel. The smaller the height of the flow channel, the more likely it is that this problem will occur. The present invention provides a solution to this problem by modifying a planar degasser so that liquid can flow through the flow channel both under vacuum and when the vacuum is turned off.

The invention is defined by a method according to claim 1.

In some embodiments of the invention, the supporting member is a selection plate comprising an inner selection plate surface which comprises (i) a selection plate base, and (ii) selection plate elements which (a) extend from the base, (b) are separated by intercommunicating selection areas, and (c) have outer surfaces remote from the selection plate base. The outer surfaces of the selection plate elements contact the second major surface of the separation membrane when the pressure on the first major surface is greater than the pressure on the second major surface.

In other embodiments of the invention, the supporting member is a porous material which is sufficiently rigid to support the separation membrane when the pressure on the first major surface is greater than the pressure on the second major surface. The supporting member can for example comprise (i) a rigid porous polymeric material and/or a porous metal sheet. Suitable polymeric materials are available from Porex Corporation, Fairburn, GA, USA. Suitable porous metal sheet can be made by sintering, and is for example available from the Mott Corporation, 84 Spring Lane, Fannington, CT 06032, USA.

Depending upon the exact details of the degassing apparatus, in particular the dimensions of the flow channel and the number of outlets from the flow channel, different structural features can enable liquid to flow through the flow channel when no vacuum is exerted on the membrane. Different embodiments of the invention are described below. Optionally, a flow channel can make use of a combination of two or more of these embodiments. In an apparatus having two or more flow channels, preferably each flow channel makes use of the same structural features which enable the liquid to flow through each of the flow channels when no vacuum is exerted on the chamber

In one option of the invention according to claim 1 the flow channel comprises an inlet, an outlet, and a base which comprises an open channel which runs from the inlet to the outlet. Surprisingly, it has been found that when there is a single inlet and multiple outlets, and particularly when the height of the flow channel is small, a channel which runs from the inlet to only one of the outlets may not solve the problem and permit the degassing apparatus to operate effectively without a vacuum. Preferably, therefore, when there are two or more outlets, the passageway connects the inlet to at least two of, preferably each of, the outlets. For example, the open channel runs from the inlet to one of the outlets and then continues to connect all the outlets. In some embodiments, the passageway runs in a pattern similar to an "L" or a "7". In some degassing apparatus, the same component provides the base for two flow channels, in which case that component as to open channels, one on each of the surfaces that provides a base to a flow channel. The open channels can be directly opposite to each other over part or all of their lengths, or can follow completely different paths. The open channel can for example be produced by molding at the same time as the rest of the flow plate is produced by molding, or by machining a flow plate which has been produced by molding.

The open channel can optionally have one or more of the following features in addition to those defined in claim 1 for option (1) under step A.
(1) It has a uniform cross-section throughout its length.
(2) It has a cross-section which is generally rectangular (including square) or generally U-shaped, preferably a flat bottomed U.

In option (2) under step A as defined in claim 1, the base of the flow channel comprises upstanding features which enable fluid to flow from the inlet to the outlet even when the vacuum is off and the membrane has come into contact with the outstanding features on the base of the flow channel. The upstanding features can prevent substantially all contact between the membrane and the base of the flow channel, or only over an area which runs continuously from the inlet to the outlet.

In another embodiment, the separation membrane is placed under tension so that at least part of it does not to contact the flow plate chamber when the vacuum is off, thus enabling fluid to flow from the inlet to the outlet.

In another embodiment, the flow channel comprises a planar apertured member which lies between the base of the flow channel and the separation membrane. The dimensions of the apertured member must be such that it creates a continuous passageway between the inlet and the outlet when the vacuum is off. Thus, the apertured member can have the same linear dimensions as the base of the flow channel or can cover only a part of the base of the flow channel which runs between the inlet and the outlet. In addition, the dimensions of the apertured member must of course be such that, when the apparatus is being used to degas a fluid, the fluid can pass through the flow channel. The apertured member can be composed of a metallic or polymeric material, for example a polymeric composition which will not be degraded by fluids passing through the apparatus, for example a composition based on a polyetheretherketone (PEEK), polytetrafluoroethylene, a polymer of a perfluoroalkoxyethylene (PFA), a polymer of ethylene chlorotrifluoroethylene, or a polyimide. The thickness of the apertured member cannot exceed the height of the flow channel, and may be for example 0.0001-0.0030 inch. Suitable apertured members are available from Dexmet Corporation, Wallingford, Connecticut, USA.

In another embodiment, the apparatus includes a passageway which is closed when the vacuum is on, but open when the vacuum is off, for example a passageway having a valve which is controlled by the vacuum. This embodiment has the advantage that it does not in any way compromise the degassing efficiency of the apparatus.

In the method which comprises passing a liquid to be degassed through a planar degasser the method comprises the steps of
(1) passing a first liquid to be degassed through a planar degasser according to the invention while the pressure on the first major surface is greater than the pressure on the second major surface,
(2) after step (1), reducing the pressure on the second major surface so that it is equal to or less than the pressure on the second major surface, and passing a second liquid through the flow channel.
This embodiment of the method can also include a further step (3), after step (2), in which the pressure on the first major surface is increased so that it is greater than the pressure on the second major surface, and a liquid to be degassed, which may for example be the second liquid or a third liquid or another sample of the first liquid, is passed through the planar degasser.

In a further aspect this disclosure provides a flow plate which is suitable for use in a planar degasser according to invention and which comprises at least one inlet and at least one outlet, and structural features which enable liquid to flow from the inlet to the outlet or outlets when the flow plate is incorporated in a planar degasser according to the invention when the pressure on the first major surface is equal to or less than the pressure on the second major surface.

In a further aspect, this invention provides a method comprising the steps of
(1) attaching a syringe to a (priming) valve on an HPLC pump that is located immediately upstream from the pump's input check valves,
(2) opening the valve on an HPLC pump that is located immediately upstream from the input check valves,
(3) drawing fluid from a reservoir, through the connecting tubing leading to a planar degasser according to the first aspect of the invention, through the planar degasser, through tubing leading from the planar degasser to the pump, and into the syringe,
(4) applying power to the HPLC pump which also energizes a vacuum source attached to a planar degasser, and
(5) initiating the pump's pumping action.

### BRIEF DESCRIPTION OF THE DRAWINGS.

The invention is illustrated in the accompanying drawings, which are diagrammatic in nature and are not to scale, and in which
Figure 1 is a perspective view of a flow plate suitable for use in the invention, and
Figure 2 is a cross-section on line 2-2 of the flow plate in Figure 1.

### DETAILED DESCRIPTION OF THE INVENTION.

In the Summary of the Invention above, the Detailed Description of the Invention, the Examples, and the claims below, and the accompanying drawings, reference is made to particular features (including for example components, ingredients, elements, devices, apparatus, systems, groups, ranges, method steps, test results, etc.) of the invention. It is to be understood that the disclosure of the invention in this specification includes all possible combinations of such particular features. For example, where a particular feature is disclosed in the context of a particular aspect, a particular embodiment, a particular claim, or a particular Figure, that feature can also be used in combination with other particular aspects, embodiments, claims and Figures, and in the invention generally, except where the context excludes that possibility. The invention disclosed herein, and the claims, include embodiments not specifically described herein and can for example make use of features which are not specifically described herein, but which provide functions which are the same, equivalent or similar to, features specifically disclosed herein.

The term "comprises" and grammatical equivalents thereof are used herein to mean that, in addition to the features specifically identified, other features are optionally present. For example, a composition or device "comprising" (or "which comprises") components A, B and C can contain only components A, B and C, or can contain not only components A, B and C but also one or more other components. The term "consisting essentially of' and grammatical equivalents thereof is used herein to mean that, in addition to the features specifically identified, other features may be present which do not materially alter the claimed invention. The term "at least" followed by a number is used herein to denote the start of a range beginning with that number (which may be a range having an upper limit or no upper limit, depending on the variable being defined). For example "at least 1" means 1 or more than 1, and "at least 80%" means 80% or more than 80%. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40 %. When a range is given as " (a first number) to (a second number)" or "(a first number) - (a second number)", this means a range whose lower limit is the first number and whose upper limit is the second number. The terms "plural", "multiple", "plurality" and "multiplicity" are used herein to denote two or more than two features.

Where reference is made herein to a method comprising two or more defined steps, the defined steps can be carried out in any order or simultaneously (except where the context excludes that possibility), and the method can optionally include one or more other steps which are carried out before any of the defined steps, between two of the defined steps, or after all the defined steps, except where the context excludes that possibility. Where reference is made herein to "first" and "second" features, this is generally done for identification purposes; unless the context requires otherwise, the first and second features can be the same or different, and reference to a first feature does not mean that a second feature is necessarily present (though it may be present). Where reference is made herein to "a" or "an" feature, this includes the possibility that there are two or more such features (except where the context excludes that possibility). Thus there may be a single such feature or a plurality of such features. Where reference is made herein to two or more features, this includes the possibility that the two or more features are replaced by a lesser number or greater number of features which provide the same function, except where the context excludes that possibility. The numbers given herein should be construed with the latitude appropriate to their context and expression; for example, each number is subject to variation which depends on the accuracy with which it can be measured by methods conventionally used by those skilled in the art.

If any element in a claim of this specification is considered to be, an element in a claim for combination which is expressed as a means or step for performing a specified function without the recital in the claim of structure, material, or acts in support thereof, and is, therefore, construed to cover the corresponding structure, material, or acts described in the specification and equivalents thereof, then the corresponding structure, material, or acts in question include such structure, material, or acts described in the US patent documents and the equivalents of such structure, material, or acts.

In this specification, parts and percentages are by weight, except where otherwise noted. Temperatures are in degrees Centigrade (°C).

This specification incorporates by reference all documents referred to herein and all documents filed concurrently with this specification or filed previously in connection with this application, including but not limited to such documents which are open to public inspection with this specification.

In one embodiment, the apparatus of the disclosure comprises
(1) a flow plate which comprises(a) a flow plate chamber, (b) an inner flow plate surface, and (c) a flow plate peripheral member which (i) surrounds the flow plate chamber, and (ii) extends away from the inner flow plate surface
(2) a selection plate comprising
   (a) an inner selection plate surface which comprises (i) a selection plate base and (ii) selection plate elements which extend from the base, are separated by intercommunicating selection areas, and have outer surfaces remote from the selection plate base, and
   (b) a selection plate peripheral member which surrounds the inner selection plate surface and extends away from the selection plate base;
(3) a planar separation membrane which
   (a) comprises (i) a membrane transmission section having a first major surface and a second major surface, and (ii) a membrane peripheral member which surrounds the membrane transmission section, and
   (b) lies between the flow plate and the selection plate;
(4) a flow channel which (a) comprises the flow plate chamber, and (b) is at least in part bounded by the first major surface of the membrane transmission section, the flow plate peripheral member and the inner flow plate surface ;
(5) an inlet for liquid to enter the flow channel;
(6) an outlet for liquid to leave the flow channel;
(7) a selection channel which is at least in part bounded by the second major surface of the membrane transmission section, the selection plate base, and the selection plate elements; and
(8) at least one selection plate port for maintaining a selection fluid in the selection channel;
the flow plate peripheral member and the selection plate peripheral member being sealed to each other;
the apparatus comprising one or more structural features which enable liquid to flow through the flow channel when no vacuum is exerted on the membrane.

The seal between the flow plate peripheral member and the selection plate peripheral member can for example be accomplished by sandwiching the membrane peripheral member between the flow plate peripheral member and the selection plate peripheral member so that it directly contacts each of the flow plate peripheral member and the selection plate peripheral member. Alternatively, the seal can be accomplished in some other way, for example making use of a seal comprising an O-ring. If the structural feature which enables liquid to flow through the flow channel when no vacuum is exerted on the membrane is a planar apertured member, it can also be sandwiched between the flow plate peripheral member and the selection plate peripheral member.

In a first example of this embodiment, the apparatus comprises (in addition to the one or more structural features which enable liquid to flow through the flow channel when no vacuum is exerted on the membrane) a single flow plate, a single selection plate, a single planar membrane, a single flow channel, and a single selection channel.

In a second example of this embodiment, the apparatus comprises (in addition to the one or more structural features which enable liquid to flow through the flow channel when no vacuum is exerted on the membrane) separate first and second selection plates, first and second membranes, first and second selection channels, first and second flow channels, and a single flow plate, the single flow plate having a first surface which provides the inner flow plate surface of one of the flow channels and a second surface which provides the inner flow plate surface of the other flow channel. One example of such an apparatus, without the structural features which enable liquid to flow through the flow channels when no vacuum is exerted on the membranes, is described in WO 2011/031333, in particular claim 5 of WO 2011/031333. In such apparatus, in use, the liquid to be degassed first passes through the first flow channel, from the inlet to the outlet, then passes from the outlet of the first flow channel into the second flow channel, then passes through the second flow channel to an outlet from the second flow channel.

In a second embodiment, the apparatus of the disclosure contains (in addition to the one or more structural features which enable liquid to flow through the flow channel when no vacuum is exerted on the membrane) two selection channels and two membranes, and a single flow channel. One example of such an apparatus (without the structural features which enable liquid to flow through the flow channel when no vacuum is inserted on the membranes) is described in WO 2011/031333, in particular in claim 6 of WO 2011/031333. Since such an apparatus does not have an inner flow plate surface (the flow channel being defined by the flow plate peripheral member and the two separation membranes), the structural feature which enables liquid to flow through the flow channel when no vacuum is exerted on the membranes cannot be an open channel in the inner flow plate surface, and must be one of the other alternatives

It is usually preferable for the flow plate(s) and the selection plate(s) to have strictly planar configurations, though the invention includes the possibility that one or more of them is not strictly planar.

The problem of the membrane contacting the bottom of the flow channel when the vacuum is turned off is more likely to occur when the height of flow channel is small. Thus, the invention is particularly useful when the height of the flow channel is less than 0.03 inch (0.75 mm), especially when it is less than 0.01 inch (0.025 mm) or less than 0.005 inch (0.12 mm).

Preferred apparatus and method of the disclosure have one or more of the features (1)-(8) set out on page 11, lines 3-20, of WO 2011/031333.

The plan shape of the flow plate(s) and the selection plate(s), i.e. their shape when viewed in plan, can be any shape. However, it is generally convenient for them to have a generally rectangular (including square) plan shape and for all the flow plate(s) and the selection plate(s) to have substantially the same plan shape. Generally, the length dimension (i.e. the dimension in the direction in which the liquid flows) of the rectangular shape is greater than, e.g. 1.1-2.0 times, the width dimension.

Other optional features of the apparatus and method of the disclosure include the optional features set out on page 12, line 8, to page 16, line 2, of WO 2011/031333.

In the embodiments described above, the selection plate can be replaced by a porous supporting member which is sufficiently rigid to maintain the separation membrane in place.

The method of the invention is particularly useful for processing a liquid, for example an HPLC eluent, an analytical sample or an inkjet fluid, the selection fluid being a gas, for example air, under reduced pressure, which is frequently referred to in this specification simply as "a vacuum." It is also very useful for degassing jet fuels.

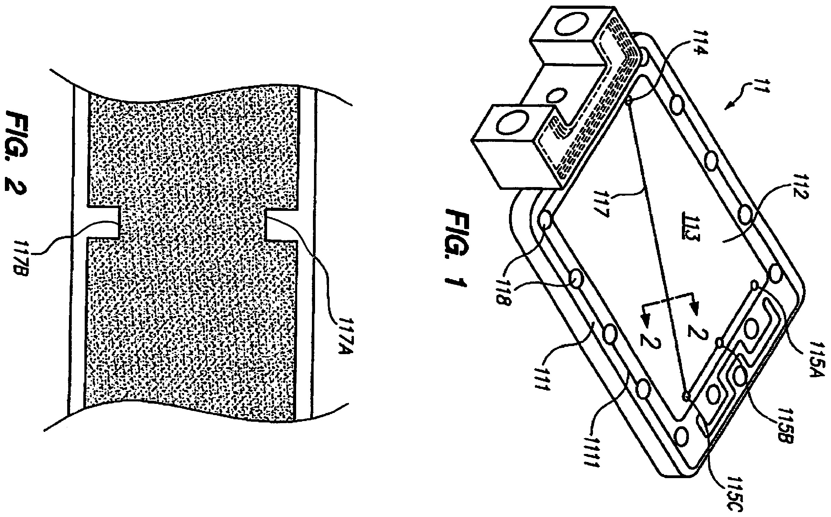

Referring now to Figure 1, the following reference numerals are used to indicate different components of the flow plate.
11 flow plate.
   111 flow plate peripheral member
      1111 upstanding irregularity on the flow plate peripheral member.
      112 flow plate channel
      113 inner flow plate surface (base of the flow channel)
      114 inlet to flow channel
      115A, 115B, 115C outlet from flow channel
      117 channel in in a flow plate surface
   118 rivet holes.

Figure 2 is a cross-section on line 2-2 of Figure 1, and shows two open channels, on opposite sides of the flow plate (only one of the channels being visible in Figure 1). The channels were produced in the same molding operation as the remainder of the flow plate.

## Claims

1. A method which comprises
(A) providing a planar degasser comprising
(1) a flow plate (11) comprising a flow channel (112) comprising a base (113), at least one inlet (114) and at least one outlet (115A,115B,115C), the flow channel having a height which is less than 0.75 mm (0.03 inch),
(2) a planar separation membrane comprising a membrane transmission section which has a first major surface and a second major surface,
(3) a supporting member which is adjacent to the second major surface of the membrane transmission section;
(a) the flow channel is at least in part bounded by the base (113) of the flow channel and the first major surface of the membrane transmission section of the separation membrane,
(b) the supporting member supports and contacts the second major surface of the membrane transmission section when the pressure on the first major surface of the membrane transmission section is greater than the pressure on the second major surface of the transmission section and the vacuum is on over the membrane transmission section of the separation membrane, and
(c) the membrane transmission section can separate from the support of the supporting member when the pressure on the first major surface of the membrane is less than the pressure on the second major surface of the transmission section and the vacuum is off above the membrane transmission section of the separation membrane, thereby causing the membrane transmission section to contact the base (113) of the flow channel;
(4) at least one structural feature which enables the second liquid to flow from the at least one inlet to the at least one outlet after the membrane has separated from the supporting member and contacted the base (113) of the flow channel, the structural feature being selected from
(1) the base (113) of the flow channel (112) comprises an open channel (117) which (i) runs from the inlet to the outlet, (ii) through which the second liquid passes in step (D), (iii) has a cross-sectional area of 0.3 - 0.5 mm² (0.0005 - 0.0008 inch²) and (iv) has a width (measured at its widest point if the width is not uniform) of 0,5-0,75 mm (0.02 - 0.03 inch); and
(2) the base (113) of the flow channel (112) comprises upstanding features which, when the vacuum is off and the membrane has separated from the supporting member and contacted the base (113) of the flow channel, enable the second liquid to flow from the inlet to the outlet in step (D);
(B) passing a liquid to be degassed through the flow channel while the pressure on the first major surface of the membrane transmission section is greater than the pressure on the second major surface of the transmission section and the supporting member supports and contacts the second major surface of the membrane transmission section;
(C) after step (B), reducing the pressure on the first major surface of the membrane transmission section so that (1) the pressure on the first major surface of the membrane is less than the pressure on the second major surface of the transmission section and the vacuum is off above the membrane transmission section of the separation membrane, and (2) the membrane separates from the supporting member; and (3) contacts the base (113) of the flow channel; and
(D) after step (C), passing a second liquid from the inlet to the outlet while the vacuum is off.

2. A method according to claim 1 wherein (i) said structural feature is the flow channel (112) which comprises an inlet, an outlet and a base (113) which comprises an open channel (117) which runs from the inlet to the outlet, and (ii) (a) the flow channel comprises a single inlet (114) and two or more outlets (115A, 115B, 115C) and (b) the open channel runs from the single inlet to at least two of the outlets.

3. A method according to claim 2 wherein said structural feature is the flow channel (112) which comprises an inlet, an outlet and a base (113) which comprises an open channel (117) which runs from the inlet to each of outlets, and wherein the open channel (117) has a height of 0.5-0.75 mm (0.02-0.03 inch).

4. A method according to any of the preceding claims wherein the flow channel (112) has a height of less than 0.25 mm (0.01 inch).

5. A method according to any of the preceding claims wherein the supporting member is a selection plate comprising an inner selection plate surface which comprises (i) a selection plate base, and (ii) selection plate elements which extend from the selection plate base, are separated by intercommunicating selection areas, and have outer surfaces remote from the selection plate base.

6. A method according to claim 5 wherein
(1) the flow plate (11) comprises (a) a flow plate chamber, (b) an inner flow plate surface (113), and (c) a flow plate peripheral member (112) which (i) surrounds the flow plate chamber, and (ii) extends away from the inner flow plate surface,
(2) the selection plate comprises the selection plate base and the selection plate elements extending from the base, and a selection plate peripheral member which surrounds the selection plate surface and extends away from the selection plate base, and
(3) the planar separation membrane comprises a membrane peripheral member which surrounds the membrane transmission section, and which lies between the flow plate and the selection plate;
the flow plate peripheral member and the selection plate peripheral member being sealed to each other by sandwiching the membrane peripheral member between the flow plate peripheral member and the selection plate peripheral member so that the membrane peripheral member directly contacts each of the flow plate peripheral member and the selection plate peripheral member.

7. A method according to claim 5 or 6 wherein each of the flow plate and the selection plate has a shape, when viewed in plan, which is generally rectangular (including square).

8. A method according to claim 7 wherein each of the flow plate and the selection plate has a rectangular shape in which the length dimension (i.e. the dimension in the direction in which the liquid flows) is 1.1-2.0 times the width dimension.

9. A method according to any of claims 1-4 wherein the supporting member is a porous material which is sufficiently rigid to maintain the separation membrane in place during step (B).

## Patentansprüche

1. Verfahren, umfassend
(A) Bereitstellen eines planaren Entgasers, umfassend
(1) eine Flussplatte (11), umfassend einen Flusskanal (112) umfassend eine Basis (113), wenigstens einen Einlass (114) und wenigstens einen Auslass (115A, 115B, 115C), wobei der Flusskanal eine Höhe aufweist, die weniger als 0,75 mm (0,03 Inch) beträgt,
(2) eine planare Trennmembran, umfassend einen Membrandurchlassabschnitt, der eine erste Hauptoberfläche und eine zweite Hauptoberfläche aufweist,
(3) ein Trägerelement, das zu der zweiten Hauptoberfläche des Membrandurchlassabschnitts benachbart ist;
(a) wobei der Flusskanal wenigstens teilweise von der Basis (113) des Flusskanals und der ersten Hauptoberfläche des Membrandurchlassabschnitts der Trennmembran begrenzt ist,
(b) wobei das Trägerelement die zweite Hauptoberfläche des Membrandurchlassabschnitts trägt und damit Kontakt bildet, wenn der Druck an der ersten Hauptoberfläche des Membrandurchlassabschnitts größer als der Druck an der zweiten Hauptoberfläche des Durchlassabschnitts ist und der Unterdruck über dem Membrandurchlassabschnitt der Trennmembran anliegt, und
(c) wobei sich der Membrandurchlassabschnitt von dem Träger des Trägerelements trennen kann, wenn der Druck an der ersten Hauptoberfläche der Membran kleiner als der Druck an der zweiten Hauptoberfläche des Durchlassabschnitts ist und der Unterdruck über dem Membrandurchlassabschnitt der Trennmembran nicht anliegt, um zu bewirken, dass der Membrandurchlassabschnitt mit der Basis (113) des Flusskanals Kontakt bildet;
(4) wenigstens ein Strukturelement, das ermöglicht, dass die zweite Flüssigkeit von dem wenigstens einen Einlass zu dem wenigstens einen Auslass fließt, nachdem sich die Membran von dem Trägerelement getrennt und mit der Basis (113) des Flusskanals Kontakt gebildet hat, wobei das Strukturelement ausgewählt ist aus
(1) der Basis (113) des Flusskanals (112), die einen offenen Kanal (117) umfasst, der (i) von dem Einlass zu dem Auslass verläuft, (ii) durch den die zweite Flüssigkeit bei Schritt (D) fließt, (iii) der eine Querschnittsfläche von 0,3-0,5 mm² (0,0005-0,0008 Inch²) aufweist und (iv) der eine Breite (gemessen an seinem breitesten Punkt, falls die Breite ungleichmäßig ist) von 0,5-0,75 mm (0,02-0,03 Inch) aufweist; und
(2) der Basis (113) des Flusskanals (112), die hochstehende Elemente umfasst, die, wenn der Unterdruck nicht anliegt und sich die Membran von dem Trägerelement getrennt und mit der Basis (113) des Flusskanals Kontakt gebildet hat, ermöglichen, dass die zweite Flüssigkeit bei Schritt (D) von dem Einlass zu dem Auslass fließt;
(B) Leiten einer zu entgasenden Flüssigkeit durch den Flusskanal, wobei der Druck an der ersten Hauptoberfläche des Membrandurchlassabschnitts größer als der Druck an der zweiten Hauptoberfläche des Membrandurchlassabschnitts ist und das Trägerelement die zweite Hauptoberfläche des Membrandurchlassabschnitts trägt und damit Kontakt bildet;
(C) nach Schritt (B) Verringern des Drucks an der ersten Hauptoberfläche des Membrandurchlassabschnitts, so dass (1) der Druck an der ersten Hauptoberfläche der Membran kleiner als der Druck an der zweiten Hauptoberfläche des Durchlassabschnitts ist und der Unterdruck über dem Membrandurchlassabschnitt der Trennmembran nicht anliegt und (2) die Membran sich von dem Trägerelement trennt und (3) mit der Basis (113) des Flusskanals Kontakt bildet; und
(D) nach Schritt (C) Leiten einer zweiten Flüssigkeit von dem Einlass zu dem Auslass, während der Unterdruck nicht anliegt.

2. Verfahren gemäß Anspruch 1, wobei (i) das Strukturelement der Flusskanal (112) ist, der einen Einlass, einen Auslass und eine Basis (113) umfasst, die einen offenen Kanal (117) umfasst, der von dem Einlass zu dem Auslass verläuft, und (ii) (a) der Flusskanal einen einzigen Einlass (114) und zwei oder mehr Auslässe (115A, 115B, 115C) umfasst und (b) der offene Kanal von dem einzigen Einlass zu wenigstens zwei der Auslässe verläuft.

3. Verfahren gemäß Anspruch 2, wobei das Strukturelement der Flusskanal (112) ist, der einen Einlass, einen Auslass und eine Basis (113) umfasst, die einen offenen Kanal (117) umfasst, der von dem Einlass zu jedem der Auslässe verläuft, und wobei der offene Kanal (117) eine Höhe von 0,5-0,75 mm (0,02-0,03 Inch) aufweist.

4. Verfahren gemäß einem der vorstehenden Ansprüche, wobei der Flusskanal eine Höhe von weniger als 0,25 mm (0,01 Inch) aufweist.

5. Verfahren gemäß einem der vorstehenden Ansprüche, wobei das Trägerelement eine Auswahlplatte ist, die eine innere Auswahlplattenoberfläche umfasst, die umfasst: (i) eine Auswahlplattenbasis und (ii) Auswahlplattenelemente, die von der Auswahlplattenbasis vorragen, durch miteinander verbundene Auswahlflächen getrennt sind und Außenoberflächen aufweisen, die von der Auswahlplattenbasis entfernt sind.

6. Verfahren gemäß Anspruch 5, wobei
(1) die Flussplatte (11) (a) eine Flussplattenkammer, (b) eine innere Flussplattenoberfläche (113) und (c) ein Flussplatten-Randelement (112), das (i) die Flussplattenkammer umgibt und (ii) von der inneren Flussplattenoberfläche weg ragt, umfasst,
(2) die Auswahlplatte die Auswahlplattenbasis, die Auswahlplattenelemente, die von der Basis weg ragen, und ein Auswahlplatten-Randelement, das die Auswahlplattenoberfläche umgibt und von der Auswahlplattenbasis weg ragt, umfasst, und
(3) die planare Trennmembran ein Membran-Randelement, das den Membrandurchlassabschnitt umgibt und das zwischen der Flussplatte und der Auswahlplatte liegt, umfasst;
wobei das Flussplatten-Randelement und das Auswahlplatten-Randelement aneinandergebunden sind, indem sie das Membran-Randelement zwischen dem Flussplatten-Randelement und dem Auswahlplatten-Randelement einschließen, so dass das Membran-Randelement sowohl mit dem Flussplatten-Randelement als auch mit dem Auswahlplatten-Randelement direkten Kontakt bildet.

7. Verfahren gemäß Anspruch 5 oder 6, wobei jede von der Flussplatte und der Auswahlplatte eine Form aufweist, die bei Ansicht von oben allgemein rechteckig (einschließlich quadratisch) ist.

8. Verfahren gemäß Anspruch 7, wobei jede von der Flussplatte und der Auswahlplatte eine rechteckige Form aufweist, bei der die Längenabmessung (d. h. die Abmessung in der Richtung, in der die Flüssigkeit fließt) 1,1-2,0-mal der Breitenabmessung beträgt.

9. Verfahren gemäß einem der Ansprüche 1-4, wobei das Trägerelement ein poröses Material ist, das ausreichend starr ist, um die Trennmembran während Schritt (B) an ihrem Ort zu halten.

## Revendications

1. Procédé qui consiste à
(A) fournir un dégazeur plan comprenant
(1) une plaque d'écoulement (11) comprenant un canal d'écoulement (112) comprenant une base (113), au moins une admission (114) et au moins une évacuation (115A, 115B, 115C), le canal d'écoulement ayant une hauteur qui est inférieure à 0,75 mm (0,03 pouce),
(2) une membrane de séparation plane comprenant une section transmission par membrane qui a une première surface principale et une seconde surface principale,
(3) un élément de support qui est adjacent à la seconde surface principale de la section transmission par membrane ;
(a) le canal d'écoulement est au moins en partie lié par la base (113) du canal d'écoulement et la première surface principale de la section transmission par membrane de la membrane de séparation,
(b) l'élément de support supporte la seconde surface principale de la section transmission par membrane et est en contact avec celle-ci lorsque la pression sur la première surface principale de la section transmission par membrane est supérieure à la pression sur la seconde surface principale de la section transmission et que le vide est appliqué sur la section transmission par membrane de la membrane de séparation, et
(c) la section transmission par membrane peut se séparer du support de l'élément de support lorsque la pression sur la première surface principale de la membrane est inférieure à la pression sur la seconde surface principale de la section transmission et que le vide n'est pas appliqué sur la section transmission par membrane de la membrane de séparation, ce qui amène la section transmission par membrane à entrer en contact avec la base (113) du canal d'écoulement ;
(4) au moins une caractéristique structurelle qui permet que le second liquide s'écoule depuis l'au moins une admission vers l'au moins une évacuation après que la membrane s'est séparée de l'élément de support et est entrée en contact avec la base (113) du canal d'écoulement, la caractéristique structurelle étant sélectionnée entre
(1) la base (113) du canal d'écoulement (112) comprend un canal ouvert (117) qui (i) va de l'admission à l'évacuation, (ii) à travers lequel passe le second liquide à l'étape (D), (iii) a une surface en coupe transversale de 0,3 à 0,5 mm² (0,0005 à 0,0008 pouce²) et (iv) a une largeur (mesurée en son point le plus large si la largeur n'est pas uniforme) de 0,5 à 0,75 mm (0,02 à 0,03 pouce) ; et
(2) la base (113) du canal d'écoulement (112) comprend des caractéristiques verticales qui, lorsque le vide n'est pas appliqué et que la membrane s'est séparée de l'élément de support et est entrée en contact avec la base (113) du canal d'écoulement, permettent que le second liquide s'écoule depuis l'admission vers l'évacuation à l'étape (D) ;
(B) faire passer un liquide à dégazer à travers le canal d'écoulement pendant que la pression sur la première surface principale de la section transmission par membrane est supérieure à la pression sur la seconde surface principale de la section transmission et que l'élément de support supporte la seconde surface principale de la section transmission par membrane et entre en contact avec celle-ci ;
(C) après l'étape (B), réduire la pression sur la première surface principale de la section transmission par membrane de sorte que (1) la pression sur la première surface principale de la membrane soit inférieure à la pression sur la seconde surface principale de la section transmission et que le vide ne soit pas appliqué sur la section transmission par membrane de la membrane de séparation, et (2) la membrane se sépare de l'élément de support ; et (3) entre en contact avec la base (113) du canal d'écoulement ; et
(D) après l'étape (C), faire passer un second liquide depuis l'admission vers l'évacuation pendant que le vide n'est pas appliqué.

2. Procédé selon la revendication 1 dans lequel (i) ladite caractéristique structurelle est le canal d'écoulement (112) qui comprend une admission, une évacuation et une base (113) qui comprend un canal ouvert (117) qui va de l'admission à l'évacuation, et (ii) (a) le canal d'écoulement comprend une admission unique (114) et deux évacuations (115A, 115B, 115C) ou plus et (b) le canal ouvert va de l'admission unique à au moins deux des évacuations.

3. Procédé selon la revendication 2 dans lequel ladite caractéristique structurelle est le canal d'écoulement (112) qui comprend une admission, une évacuation et une base (113) qui comprend un canal ouvert (117) qui va de l'admission à chacune des évacuations, et dans lequel le canal ouvert (117) a une hauteur de 0,5 à 0,75 mm (0,02 à 0,03 pouce).

4. Procédé selon l'une quelconque des revendications précédentes dans lequel le canal d'écoulement (112) a une hauteur inférieure à 0,25 mm (0,01 pouce).

5. Procédé selon l'une quelconque des revendications précédentes dans lequel l'élément de support est une plaque de sélection comprenant une surface de plaque de sélection interne qui comprend (i) une base de plaque de sélection, et (ii) des éléments de plaque de sélection qui s'étendent depuis la base de plaque de sélection, sont séparés par des zones de sélection communiquant entre elles, et ont des surfaces externes distantes de la base de plaque de sélection.

6. Procédé selon la revendication 5, dans lequel
(1) la plaque d'écoulement (11) comprend (a) une chambre de plaque d'écoulement, (b) une surface (113) de plaque d'écoulement interne, et (c) un élément périphérique (112) de plaque d'écoulement qui (i) entoure la chambre de plaque d'écoulement et (ii) s'étend à l'opposé de la surface de plaque d'écoulement interne,
(2) la plaque de sélection comprend la base de plaque de sélection et les éléments de plaque de sélection s'étendant depuis la base, et un élément périphérique de plaque de sélection qui entoure la surface de plaque de sélection et s'étend à l'opposé de la base de plaque de sélection, et
(3) la membrane de séparation plane comprend un élément périphérique membranaire qui entoure la section transmission par membrane, et qui repose entre la plaque d'écoulement et la plaque de sélection ;
l'élément périphérique de plaque d'écoulement et l'élément périphérique de plaque de sélection étant fermés hermétiquement l'un à l'autre en intercalant l'élément périphérique membranaire entre l'élément périphérique de plaque d'écoulement et l'élément périphérique de plaque de sélection de sorte que l'élément périphérique membranaire entre directement en contact avec chacun de l'élément périphérique de plaque d'écoulement et de l'élément périphérique de plaque de sélection.

7. Procédé selon la revendication 5 ou 6 dans lequel chacune de la plaque d'écoulement et de la plaque de sélection a une forme, lorsqu'on regarde dans le plan, qui est généralement rectangulaire (y compris carrée).

8. Procédé selon la revendication 7 dans lequel chacune de la plaque d'écoulement et de la plaque de sélection a une forme rectangulaire dans laquelle la longueur (à savoir, la dimension dans le sens de laquelle s'écoule le liquide) représente 1,1 à 2,0 fois la largeur.

9. Procédé selon l'une quelconque des revendications 1 à 4 dans lequel l'élément de support est un matériau poreux qui est suffisamment rigide pour maintenir la membrane de séparation en place pendant l'étape (B).
